# EUROPEAN PATENT APPLICATION

(11) **EP 3 965 487 A1**
(43) Date of publication of application: **09.03.2022**
(21) Application number: 19927072.9
(22) Date of filing: 02.05.2019
(51) Int. Cl.: H04W 72/04, H04W 4/70, H04W 28/04

(54) **USER EQUIPMENT**

(71) Applicant: NTT DOCOMO, INC., Chiyoda-ku, Tokyo 100-6150 (JP)
(72) Inventor: TAKEDA, Daiki, Tokyo 100-6150 (JP); HARADA, Hiroki, Tokyo 100-6150 (JP); OHARA,Tomoya, Tokyo 100-6150 (JP)
(74) Representative: Hoffmann Eitle
(86) International application number: PCT/JP2019/018192
(87) International publication number: WO 2020/222281

(57) **Abstract**

A user equipment includes a transmitting unit that transmits data to base station apparatus using a preconfigured uplink resource and a receiving unit that, when a search space for receiving information relevant to the uplink resource and a predetermined resource overlap each other in a time domain, monitors only one of the search space and the predetermined resource or monitors both the search space and the predetermined resource.

## Description

### TECHNICAL FIELD

The present invention relates to a user equipment in a radio communication system.

### BACKGROUND ART

Currently, discussions about Preconfigured Uplink (UL) resources (PUR) in Enhancement toward release 16 of LTE Internet of Things (IoT) of 3rd Generation Partnership Project (3GPP), that is, Narrow Band IoT (NB-IoT) or Enhanced Machine Type Communication (eMTC) have been made.

In addition, in New Radio (NR) after Release 17 of 3GPP, there is a possibility that Power saving for a user equipment in the idle mode will be discussed. In this case, for the user equipment in the idle mode, there is a possibility that a transmission method, in which the allocation of radio resources from the network side to the user equipment is not assumed (Grant less or Grant Free), will be defined in the NR.

Radio communication using the PUR mainly targets the eMTC/NB-IoT enhancement of Release 16 of 3GPP, but it is assumed that the radio communication using the PUR is not limited to the eMTC/NB-IoT enhancement of Release 16 of 3GPP and is applied to the NR system.

After the user equipment performs data transmission using the PUR, the user equipment monitors a search space for receiving feedback information for the data transmitted using the PUR, thereby receiving feedback information (ACK/NACK, UL grant for retransmission, and the like).

### CITATION LIST

### NON-PATENT DOCUMENT

Non-Patent Document 1: 3GPP TS 36.321 V15.5.0 (2019-03)

### SUMMARY OF THE INVENTION

### PROBLEM TO BE SOLVED BY THE INVENTION

There is a possibility that a search space for receiving a feedback on data transmitted using the PUR and another search space (such as a search space for paging reception) will overlap each other in the time domain. There is also a possibility that the PUR and the search space to be monitored will overlap each other in the time domain. However, in the related art, no specific technique has been proposed for appropriately coping with overlapping of resources, such as a search space.

The invention has been made in view of the aforementioned points, and it is an object of the invention to provide a technique capable of appropriately coping with overlapping of resources in a radio communication system in which data transmission is performed using preconfigured uplink resources.

### MEANS FOR SOLVING PROBLEM

According to the disclosed technique, there is provided a user equipment including: a transmitting unit that transmits data to a base station apparatus using a preconfigured uplink resource; and a receiving unit that, when a search space for receiving information relevant to the uplink resource and a predetermined resource overlap each other in a time domain, monitors only one of the search space and the predetermined resource or monitors both the search space and the predetermined resource.

### EFFECT OF THE INVENTION

According to the disclosed technique, there is provided a technique capable of appropriately coping with overlapping of resources in a radio communication system in which data transmission is performed using preconfigured uplink resources.

### BRIEF DESCRIPTION OF DRAWINGS

Fig. 1 is a diagram for describing a radio communication system according to an embodiment of the invention;
Fig. 2 is a diagram illustrating an example of radio communication using a PUR;
Fig. 3 is a diagram illustrating an operation example of data transmission by a user equipment using a Dedicated PUR;
Fig. 4 is a diagram illustrating an operation example of data transmission by a user equipment using a CBS PUR;
Fig. 5 is a diagram illustrating an operation example of data transmission by a user equipment using a CFS PUR;
Fig. 6 is a diagram illustrating an example of setting an additional search space in addition to a paging search space;
Fig. 7 is a sequence diagram illustrating an operation example in the embodiment of the invention;
Fig. 8 is a diagram illustrating an example of setting a PUR/PUR USS;
Fig. 9 is a diagram illustrating an example of setting a PUR/PUR USS;
Fig. 10 is a diagram illustrating an example of a case where a PUR USS and a paging CSS collide in Example 1;
Fig. 11 is a diagram illustrating an example of a case where a PUR USS and a paging CSS collide in Example 1;
Fig. 12 is a diagram illustrating an example of setting a PUR/PUR USS in Example 2;
Fig. 13 is a diagram illustrating an example of setting a PUR/PUR USS in Example 2;
Fig. 14 is a diagram illustrating an operation example in Example 2;
Fig. 15 is a diagram illustrating an example of the functional configuration of a base station apparatus 10 according to an embodiment of the invention;
Fig. 16 is a diagram illustrating an example of the functional configuration of a user equipment 20 according to an embodiment of the invention; and
Fig. 17 is a diagram illustrating an example of the hardware configuration of a base station apparatus 10 or a user equipment 20 according to an embodiment of the invention.

### MODE(S) FOR CARRYING OUT THE INVENTION

Hereinafter, an embodiment of the invention will be described with reference to the diagrams. In addition, the embodiment described below is an example, and the embodiment to which the invention is applied is not limited to the following embodiment.

In addition, in the following description, the operation of a user equipment in the idle mode is mainly targeted. However, the technique described below is not limited to the user equipment in the idle mode, and may be applied to a user equipment in a connected mode.

### (System configuration)

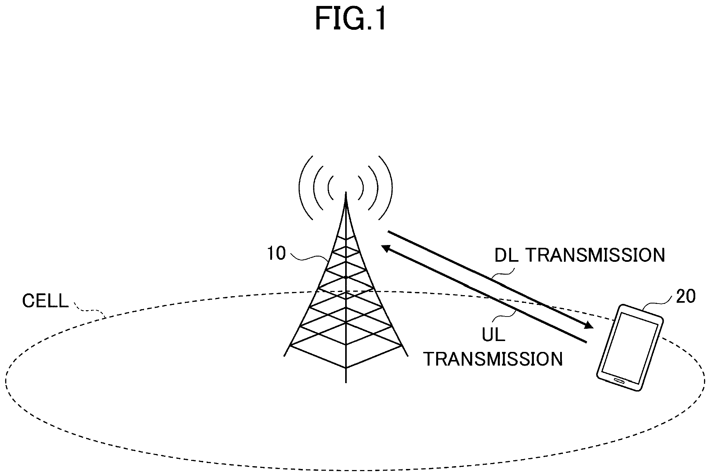

Fig. 1 is a diagram for describing a radio communication system according to an embodiment of the invention. As illustrated in Fig. 1, the radio communication system according to the embodiment of the invention includes a base station apparatus 10 and a user equipment 20. Fig. 1 illustrates one base station apparatus 10 and one user equipment 20, but this is an example, and a plurality of pieces of base station apparatuses 10 and a plurality of pieces of user equipments 20 may be provided.

The base station apparatus 10 is a communication device that provides one or more cells and performs radio communication with the user equipment 20. The physical resource of a radio signal is defined in a time domain and a frequency domain, and the time domain may be defined by the number of OFDM symbols, and the frequency domain may be defined by the number of subcarriers or the number of resource blocks. In addition, a Transmission Time Interval (TTI) in the time domain may be a slot, or the TTI may be a subframe.

The base station apparatus 10 transmits a synchronization signal and system information to the user equipment 20. The synchronization signal is, for example, PSS and SSS. The system information is transmitted through, for example, a PBCH or a PDSCH, and is also referred to as broadcast information. As illustrated in Fig. 1, the base station apparatus 10 transmits a control signal or data to the user equipment 20 by Downlink (DL), and receives a control signal or data from the user equipment 20 by Uplink (UL). In addition, here, a signal transmitted through a control channel, such as a PUCCH or a PDCCH, is called a control signal, and a signal transmitted through a shared channel, such as a PUSCH or a PDSCH, is called data. However, such naming is an example. For example, the control signal and the data may be collectively called a "signal".

The user equipment 20 is a communication device having a radio communication function, such as a smartphone, a mobile phone, a tablet, a wearable terminal, and a communication module for Machine-to-Machine (M2M). As illustrated in Fig. 1, the user equipment 20 uses various communication services provided by the radio communication system by receiving a control signal or data from the base station apparatus 10 by DL and transmitting a control signal or data to the base station apparatus 10 by UL. In addition, the user equipment 20 may be called a UE, and the base station apparatus 10 may be called an eNB (or a gNB).

### (Preconfigured uplink resources (PUR))

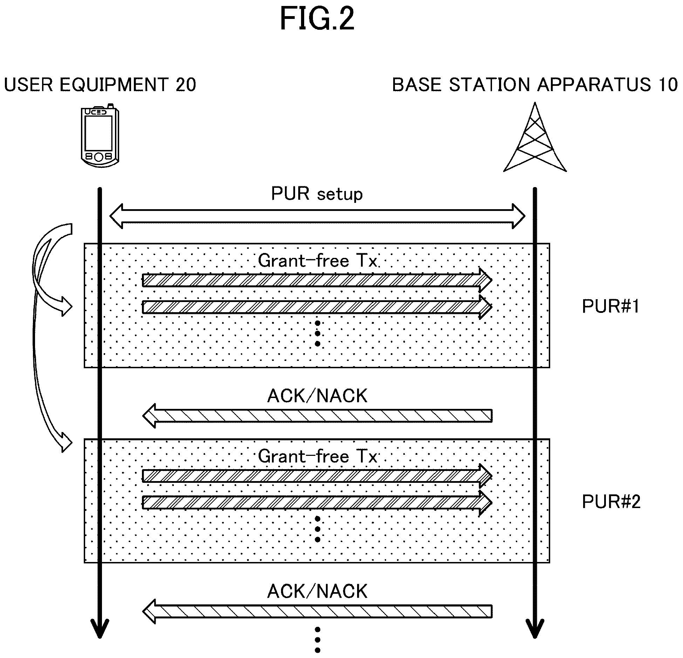

In the present embodiment, since it is assumed that preconfigured uplink resources (PUR) are used, first, an operation example of a radio communication system relevant to the PUR will be described with reference to Fig. 2. Radio communication using the PUR described below with reference to Fig. 2 mainly targets the eMTC/NB-IoT enhancement of Release 16 of 3GPP, but the radio communication using the PUR is not limited to the eMTC/NB-IoT enhancement of Release 16 of 3GPP and may be applied to the NR system. In addition, the radio communication using the PUR may be applied to a radio communication system different from any of the LTE and the NR.

As illustrated in Fig. 2, before performing communication, PUR setup for the user equipment 20 to perform data transmission is performed in advance between the base station apparatus 10 and the user equipment 20. Thereafter, using the PUR, the user equipment 20 performs data transmission, for example, periodically. That is, after the PUR setup is performed between the base station apparatus 10 and the user equipment 20, the user equipment 20 can perform data transmission using the PUR without uplink radio resources being assigned separately by the base station apparatus 10.

In addition, the data transmission method of the user equipment 20 using the PUR assumes that data transmission is performed by the user equipment 20 in the idle mode. In this regard, the above-described data transmission method using the PUR is different from a data transmission method of the user equipment 20 using semi-persistent scheduling. However, the data transmission using the PUR may be performed by the user equipment 20 in the connected mode.

### (PUR type)

In the present embodiment, the following three types of PUR can be used as PUR types. However, the following three types are examples, and the PUR type is not limited to these.
(1) Dedicated PUR
(2) Contention-based shared preconfigured UL resource (CBS PUR)
(3) Contention-free shared preconfigured UL resource (CFS PUR)

The Dedicated PUR of the above (1) is a PUR configured exclusively for each user equipment 20. When the user equipment 20 transmits data using the Dedicated PUR, the transmission resource is a dedicated resource, so that it is not necessary to apply a procedure for contention resolution. When performing the Dedicated PUR setup, a resource allocation method in LTE semi-persistent scheduling may be used.

The Contention-based shared preconfigured UL resource (CBS PUR) of the above (2) is a PUR shared between a plurality of user equipments 20. When the plurality of user equipments 20 perform transmission using the CBS PUR, the plurality of user equipments 20 may contend for the transmission. Therefore, when the plurality of user equipments 20 perform transmission using the CBS PUR, a procedure for resolving contention is applied.

In the Contention-free shared preconfigured UL resource (CFS PUR) of the above (3), the PUR is shared between a plurality of user equipments 20, but the contention resolution mechanism is not necessary.

For example, as an example of the CFS PUR, there is a CFS PUR that uses Multi-user, Multiple Input, and Multiple Output (MU-MIMO). In this case, a Demodulation Reference Signal (DM-RS, UE-specific RS) is individually allocated to a plurality of user equipments 20, so that channel estimation in the base station apparatus 10 can be individually performed for the plurality of user equipments 20. The data itself can be transmitted between the plurality of user equipments 20 using the same time and frequency resources by the MU-MIMO.

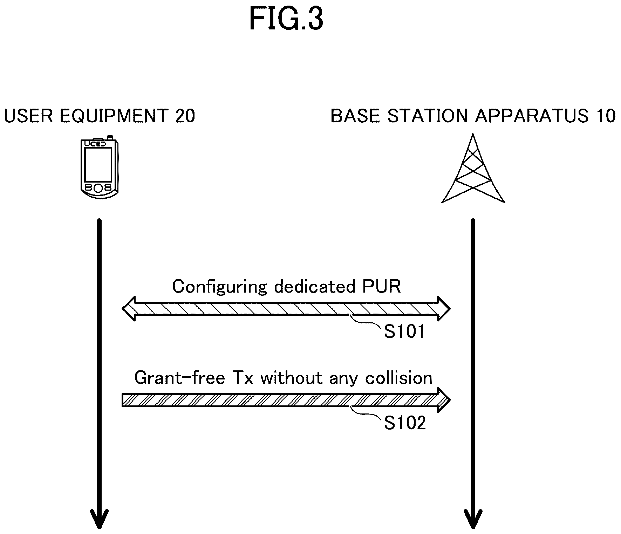

Fig. 3 is a diagram illustrating an operation example of data transmission by the user equipment 20 using (1) Dedicated PUR. First, in S101, the user equipment 20 and the base station apparatus 10 set a Dedicated PUR. Thereafter, the user equipment 20 transmits data using the corresponding Dedicated PUR at a desired timing among timings at which the Dedicated PUR is configured (S102). When transmitting data, the user equipment 20 may transmit data in the idle mode.

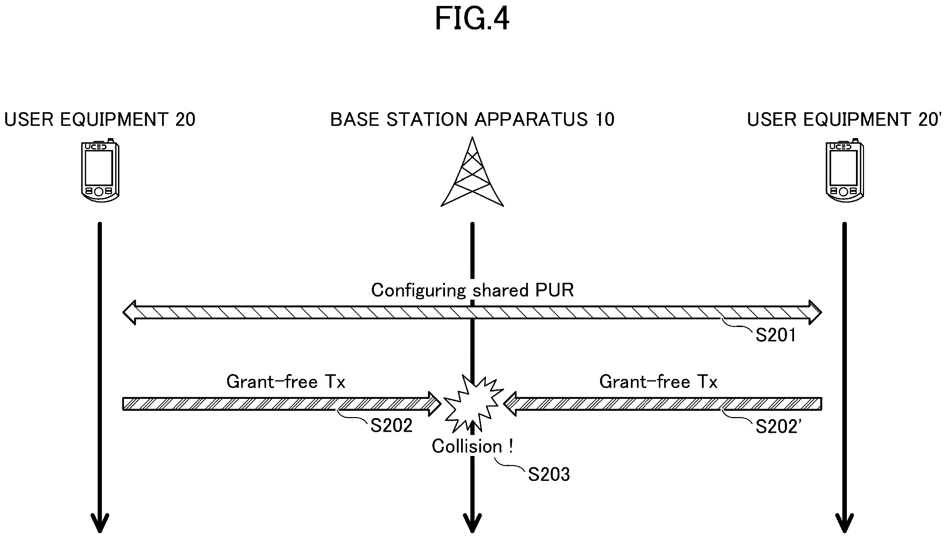

Fig. 4 is a diagram illustrating an operation example of data transmission by the user equipment 20 using (2) CBS PUR. First, in S201, the plurality of user equipments 20 and the base station apparatus 10 set a shared PUR. Then, in S202, the user equipment 20 transmits data using the shared PUR. In addition, at this time, in S202', a user equipment 20' transmits data using the shared PUR.

In this case, in S203, in the base station apparatus 10, contention between data transmitted from the user equipment 20 and data transmitted from the user equipment 20' may occur. Therefore, the base station apparatus 10 executes a procedure for contention resolution thereafter. For example, the base station apparatus 10 may instruct the user equipment 20 to retransmit data using the PUR at the specified timing.

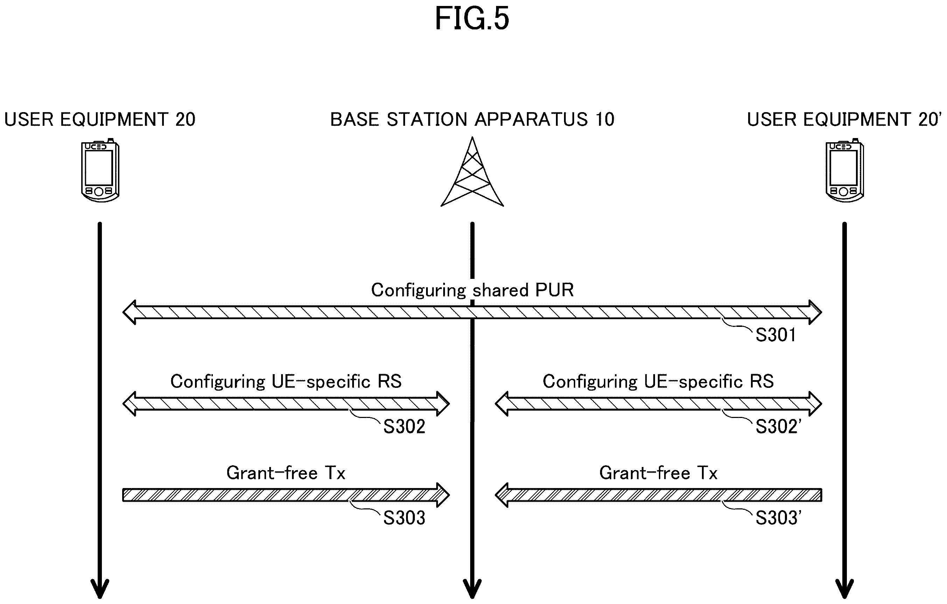

Fig. 5 is a diagram illustrating an operation example of data transmission by the user equipment 20 using (3) CFS PUR. First, in S301, the plurality of user equipments 20 and the base station apparatus 10 set a shared PUR. Then, in S302, the base station apparatus 10 sets a UE-specific RS for the user equipment 20 (in S302', the base station apparatus 10 sets the UE-specific RS for the user equipment 20').

Then, in S303, the user equipment 20 performs data transmission using the PUR set in S301 and the UE-specific RS set in S302. At this time, in S303', the user equipment 20' performs data transmission using the PUR set in S301 and the UE-specific RS set in S302'. Here, since MU-MIMO is used, the base station apparatus 10 can receive the data transmitted from the user equipment 20 and the data transmitted from the user equipment 20' separately even without performing contention resolution.

### (ACK/NACK feedback)

After the user equipment 20 in the idle mode performs data transmission without a dynamic grant from the base station apparatus 10, as an operation when receiving acknowledgment information (acknowledgment (ACK)/negative-acknowledgment (NACK)) transmitted from the base station apparatus 10, in the radio communication system according to the present embodiment, for example, an operation of Option 1 or Option 2 described below can be performed. In addition, although the ACK/NACK will be described herein as an example of feedback information, feedback information is not limited to the ACK/NACK. For example, the feedback information may be a UL grant for giving an instruction for retransmission.

### <Option 1>

The user equipment 20 receives acknowledgment information transmitted from the base station apparatus 10 by using a paging search space. The user equipment 20 in the idle mode also monitors a paging signal and a broadcast signal. Therefore, the user equipment 20 in the idle mode can receive the acknowledgment information transmitted from the base station apparatus 10 by monitoring the paging search space after transmitting the data using the PUR.

### <Option 2>

With the paging search space alone, there is a possibility that resources used for ACK/NACK feedback for the PUR cannot be sufficiently secured. Therefore, in Option 2, an additional search space is defined for the user equipment 20 to receive acknowledgment information with respect to data transmission by the user equipment 20 using the PUR. Here, the additional search space may be defined as a user-specific search space (UE-specific SS: USS) or may be defined as a user-common search space (Common SS: CSS), or both may be defined. In addition, as the RNTI used for transmission of control information transmitted in the USS or the CSS, a known RNTI such as a C-RNTI may be used, or a new RNTI for the PUR may be defined.

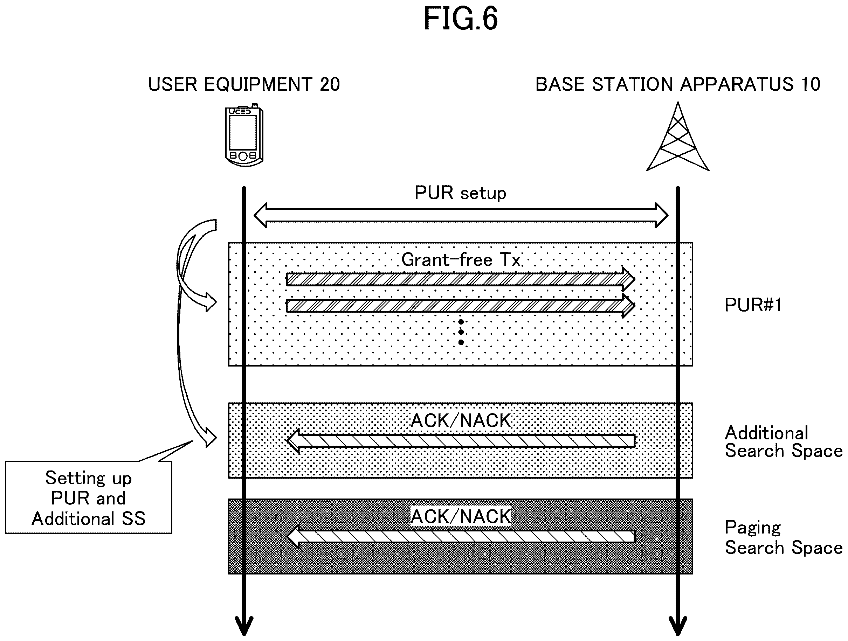

Then, by configuring the user equipment 20 in the idle mode to monitor the additional search space in addition to the paging search space, the user equipment 20 in the idle mode can receive the acknowledgment information. Fig. 6 is a diagram illustrating an example of configuring an additional search space in addition to a paging search space.

The search space monitored by the user equipment 20 is configured for the user equipment 20 by a network (that is, the base station apparatus 10), for example. For example, when the PUR is configured for the user equipment 20, the user equipment 20 may be configured to monitor only the paging search space. Alternatively, the user equipment 20 may be configured to monitor only the additional search space. Alternatively, the user equipment 20 may be configured to monitor both the paging search space and the additional search space.

As a method of arranging the additional search space, for example, in a case where the PUR is configured periodically, there is a method of arranging the additional search space at the same period as the period of the PUR. For example, the additional search space may be arranged immediately after or immediately before the PUR (in the time direction).

Alternatively, the additional search space may be arranged between one PUR and another PUR. That is, the position where the additional search space is arranged may be specified as a position relative to the PUR. In addition, the additional search space may be arranged so as to be associated with the arrangement of the PUR. For example, one additional search space may be arranged for two sets of PUR.

For example, when the PUR is set between the user equipment 20 and the base station apparatus 10, the additional search space may be configured. That is, the PUR configuration transmitted from the base station apparatus 10 to the user equipment 20 may include additional search space configuration. When the PUR is configured periodically, the time position of the additional search space may be associated with the time position of the PUR or may be the same as the time position of the PUR, or the period of the additional search space may be associated with the period of the PUR or may be the same as the period of the PUR.

As a Radio Network Temporary Identifier (RNTI) used when the user equipment 20 monitors the additional search space, an RNTI for paging may be used, or an RNTI allocated in the connected mode may be taken over in the idle mode. Alternatively, an RNTI dedicated to the additional search space may be defined, and then blind decoding of the additional search space may be performed using the RNTI dedicated to the additional search space.

### (Regarding PUR USS)

Hereinafter, the above-described Dedicated PUR is targeted as the PUR. However, techniques to be described in Example 1 and Example 2 below are not limited to the Dedicated PUR, and can be applied to other PURs. In addition, information monitored by the user equipment 20 in the PUR SS (search space, USS or CSS) is information relevant to the PUR. The information relevant to the PUR is, for example, ACK/NACK, UL grant for retransmission, and setting correction information relevant to the PUR, but is not limited thereto.

In the present embodiment, a search space unique to the user equipment 20 is configured in order for the user equipment 20 to receive feedback information (ACK/NACK, UL grant for retransmission, and the like) for UL transmission in the PUR. Hereinafter, the search space is referred to as a PUR UE specific search space (PUR USS). In addition, the use of the PUR USS in the present embodiment is an example, and a PUR CSS may be used instead of the PUR USS.

The PUR USS is an example of the additional search space described above. In addition, in the time domain, the PUR USS may be started immediately after the PUR, or may be started from a time position after a predetermined time from the end of the PUR.

In the PUR USS, the user equipment 20 monitors DCI transmitted through the PDCCH, the MPDCCH, or the NPDCCH. This may be expressed as "user equipment 20 monitors the PUR USS". The user equipment 20 monitors the DCI addressed to itself by attempting to decode DCI candidates scrambled by the RNTI unique to the user equipment 20. In addition, the PDCCH, the MPDCCH, and the NPDCCH may be collectively referred to as the PDCCH.

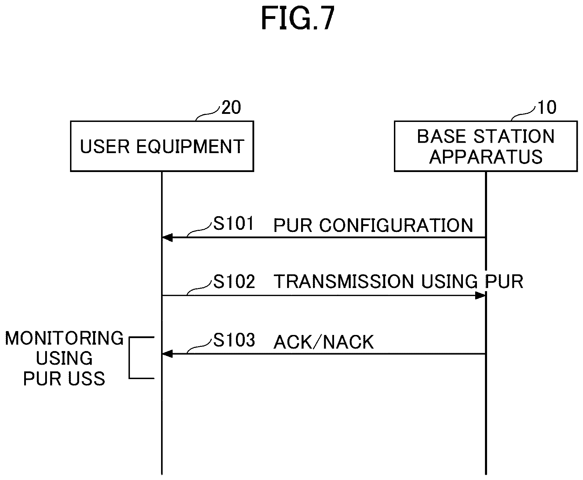

Fig. 7 illustrates an example of a sequence relevant to the PUR and the PUR USS in the radio communication system according to the present embodiment. In S101, the base station apparatus 10 transmits PUR configuration to the user equipment 20 by, for example, RRC signaling. The configuration includes, for example, information indicating the position (time position, frequency position, or time and frequency positions) and the size (time length, the number of PRBs, and the like) of the PUR and a period.

In addition, the configuration information may include information indicating the position (time position, frequency position, or time and frequency positions) and the size (time length, the number of PRBs, and the like) of the PUR USS and a period.

Alternatively, as for the PUR USS, when it is determined in advance that a band having a predetermined bandwidth of a predetermined time width is to be monitored as the PUR USS after a predetermined time from the end time position of the PUR, the configuration may not include a configuration regarding the PUR USS. In addition, as for PUR USS, the configuration may include the time length of the gap between the end time position of the PUR and the start time position of the PUR USS.

In S102 of Fig. 7, the user equipment 20 performs data transmission through the PUSCH using the PUR. In S103, the base station apparatus 10 transmits feedback information, such as ACK/NACK, to the user equipment 20 through the PDCCH. The user equipment 20 monitors the PUR USS, and can receive the ACK/NACK addressed to itself in S103.

### (Regarding resource collision)

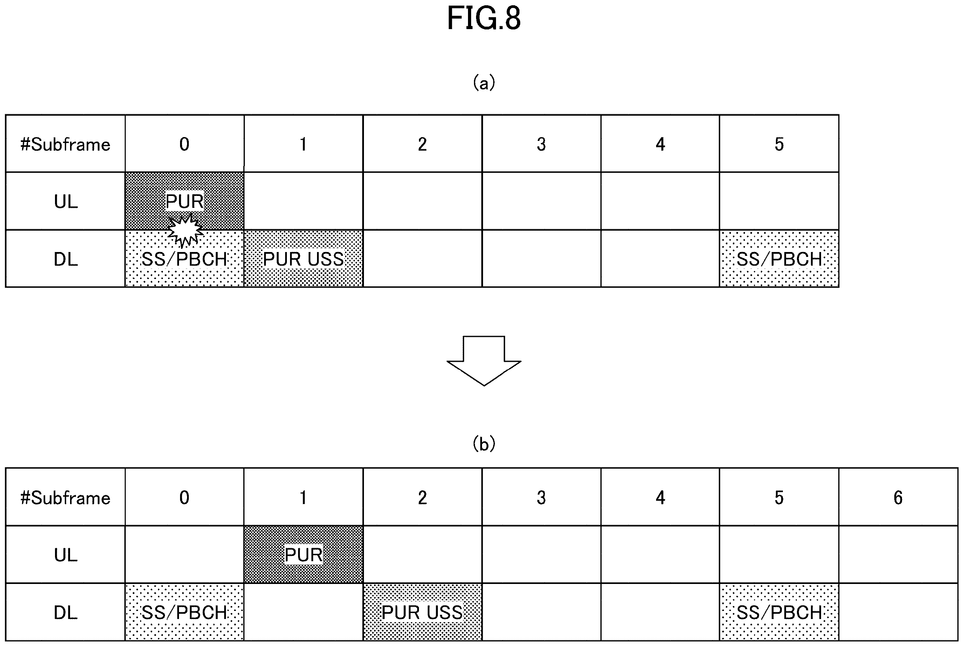

Fig. 8 illustrates an example of configuration of the PUR and the PUR USS. In addition, as illustrated in Figs. 8 to 13, in the present embodiment including Examples 1 and 2, it is assumed that the PUR and the PUR USS are configured in subframe units in the time domain. However, configuring the PUR and the PUR USS in subframe units is merely an example. For example, the PUR and the PUR USS may be configured in symbol units or slot units.

Regarding the configuration of the search space and the like, the present embodiment mainly focuses on the time domain. In addition, "overlapping (or collision)" of resources and the like in the present embodiment means overlapping in the time domain. However, resources and the like may overlap in the frequency domain in addition to the time domain.

Since the user equipment 20 assumed in the present embodiment corresponds to a narrow bandwidth in the frequency domain, it is assumed that a plurality of search spaces overlapping in the time domain cannot be monitored simultaneously. However, such an assumption is an example.

In addition, in the user equipment 20 assumed in the present embodiment, even if the UL and DL frequencies are different, UL transmission and DL reception cannot be performed simultaneously. That is, the user equipment 20 supports only half duplex. However, such an assumption is also an example.

In the example of Fig. 8(a), the PUR is configured in subframe #0, and the PUR USS is configured in subframe #1. That is, in this case, the user equipment 20 can perform data transmission using the PUR in the subframe #0, and can monitor feedback information with respect to the data transmission using the PUR USS.

However, in the subframe #0, resources for monitoring the SS (synchronization signal) and the PBCH (broadcast channel for transmitting the MIB) in the DL overlap (collides with) the PUR. In addition, in this specification, "overlap" may be replaced with "collide", or "collide" may be replaced with "overlap".

As described above, the user equipment 20 cannot perform the UL transmission and the DL reception simultaneously. Therefore, in order to avoid this collision, for example, it is conceivable to set the PUR at a time position not overlapping the time position of the SS/PBCH, as illustrated in Fig. 8(b).

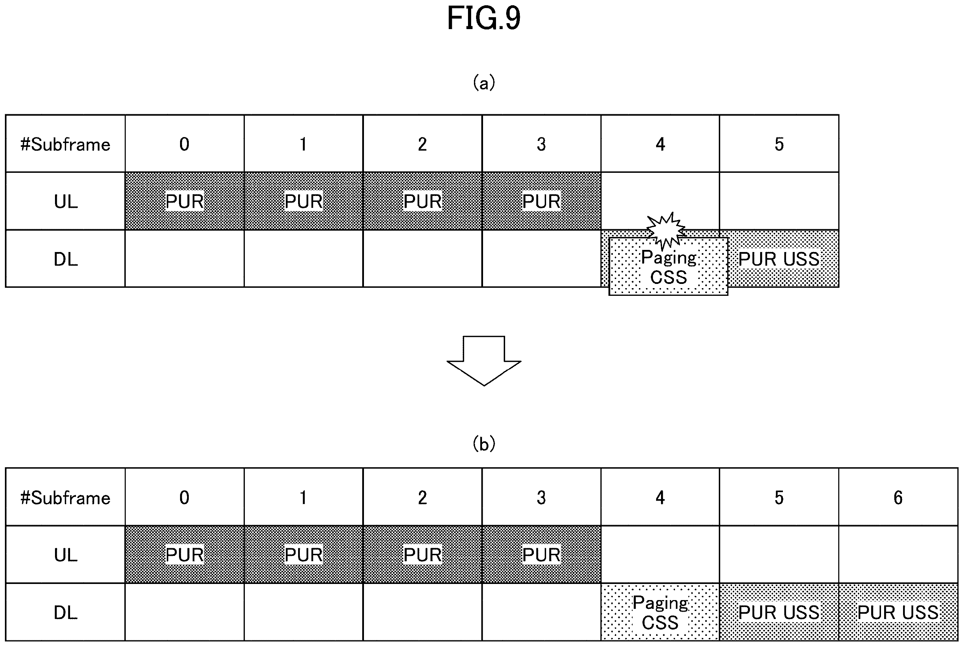

Fig. 9(a) is a diagram illustrating another example of configuring the PUR and the PUR USS. In the example of Fig. 9(a), the PUR has a length of four subframes (four repetitions), and the PUR USS is arranged immediately after the end of the PUR.

In this case, as illustrated in Fig. 9(a), in subframe #4, a paging Common Search Space (CSS) and the PUR USS collide. In order to avoid this collision, for example, as illustrated in Fig. 9(b), it is conceivable to configure the PUR USS at a time position one subframe apart from the end of the PUR (with a gap from the end of the PUR).

As described above, there is a possibility that each of the PUR and the PUR USS will collide with resources for monitoring the signal (or the channel) from the base station apparatus 10. In such a case, it is conceivable to allow the collision of resources so that the user equipment 20 monitors (or transmits) only one of the plurality of colliding resources. In addition, as exemplified in Figs. 8(b) and 9(b), it is conceivable to configure the PUR/PUR USS at a time position where collision can be avoided.

Hereinafter, an operation example relevant to monitoring any of a plurality of colliding resources will be described as Example 1, and an operation example relevant to configuring the PUR/PUR USS at a time position where collision can be avoided will be described as Example 2.

### (Example 1)

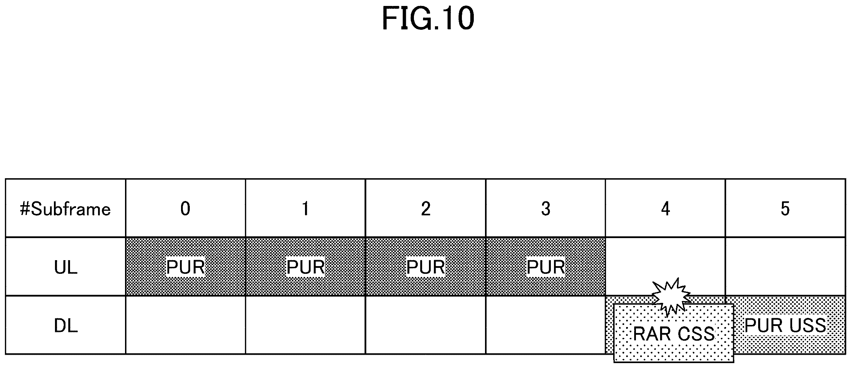

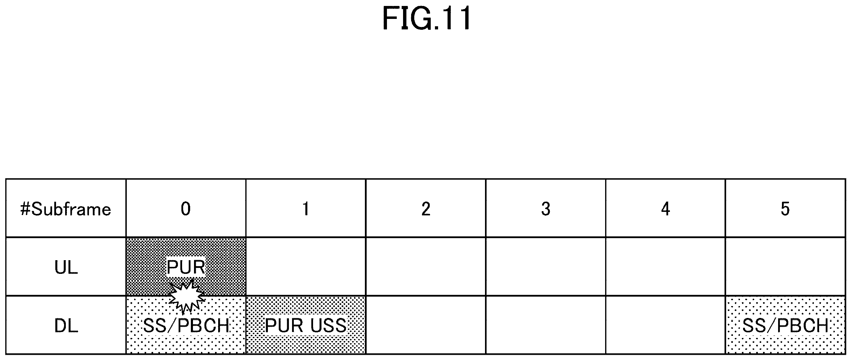

First, Example 1 will be described. In Example 1, in the sequence described with reference to Fig. 7, the configuration of the PUR and the PUR USS is performed in S101. However, for example, as illustrated in Fig. 10 and Fig. 11, the configuration content may cause a collision with respect to the PUR or the resource to be monitored.

Hereinafter, a case where a collision occurs between the PUR USS and a DL resource (resource for transmitting the SS/PBCH, CSS, or the like) monitored by the user equipment 20 will be described as Example 1-1, and a case where a collision occurs between the PUR and a DL resource monitored by the user equipment 20 will be described as Example 1-2.

### <Example 1-1>

In Example 1-1, an operation of the user equipment 20 in a case where the PUR USS and a predetermined resource of the DL monitored by the user equipment 20 collide will be described.

The predetermined resource is, for example, a resource that the user equipment 20 monitors in the idle mode. Specifically, the predetermined resource is, for example, a resource for receiving an SS (synchronization signal), a resource for receiving a Wake-up signal, a resource for receiving a PBCH, a search space for monitoring the PDCCH in order to receive system information (SIB or other SI), Type1-CSS (Paging CSS), and Type2-CSS (RAR CSS). Fig. 10 illustrates an example in which the PUR USS and the RAR CSS collide in subframe #4. RAR is an abbreviation for Random Access Response. Wake-up signal is a signal for notifying the user equipment 20 that there is paging.

In addition, monitoring the resource (search space) through which the PDCCH is transmitted means, for example, attempting to decode the DCI using the RNTI corresponding to the search space. In addition, monitoring the resource of the SS (synchronization signal) means, for example, attempting to detect the SS. In addition, monitoring the PBCH resource means, for example, attempting to decode the MIB.

When the user equipment 20 detects that the PUR USS and a predetermined resource collide at the timing of monitoring the PUR USS based on the configuration information from the base station apparatus 10 or the configuration information stored in advance, the user equipment 20 executes an operation of any one of the following Options 1 to 3.

Option 1:
The user equipment 20 monitors only the predetermined resource. In this case, the user equipment 20 omits monitoring the PUR USS at the timing, and monitors the PUR USS at the next timing (timing at which collision with the predetermined resource does not occur).

In the example of Fig. 10, in the subframe #4, the user equipment 20 monitors only the RAR CSS between the PUR USS and the RAR CSS and does not monitor the PUR USS. In this case, in the RAR CSS, feedback information with respect to data transmission in the PUR may be transmitted from the base station apparatus 10. The user equipment 20 monitors the PUR USS in subframe #5.

Option 2:
The user equipment 20 monitors only the PUR USS and does not monitor the predetermined resource. In the example of Fig. 10, in the subframe #4, the user equipment 20 monitors the PUR USS and does not monitor the RAR CSS. In this case, the user equipment 20 monitors the RAR CSS (RAR CSS that does not collide with the PUR USS) of the next period.

Option 3:
When the user equipment 20 has a capability (UE capability) of monitoring both the PUR USS and the predetermined resource, the user equipment 20 monitors both the PUR USS and the predetermined resource. In the example of Fig. 10, the user equipment 20 monitors both the PUR USS and the RAR CSS.

In the frequency domain, for example, when the PUR USS is in band 1 having a narrow bandwidth and the predetermined resource is in band 2 having a narrow bandwidth that does not overlap the band 1, the user equipment 20 monitors the band 1 and the band 2 simultaneously, or monitors both the PUR USS and the predetermined resource while switching between the band 1 and the band 2.

In addition, for example, when the PUR USS and the predetermined resource collide also in the frequency domain, the user equipment 20 attempts DCI decoding using the RNTI for the PUR USS and also attempts DCI decoding using the RNTI for the predetermined resource. In this case, since it is assumed that information transmission from the base station apparatus 10 is performed in one of the PUR USS and the predetermined resource, the user equipment 20 can decode any one of the DCI transmitted using the PUR USS and the DCI transmitted using the predetermined resource.

Regarding option selection:
Regarding which of Options 1 to 3 is to be applied by the user equipment 20, an option to be applied may be configured in the user equipment 20 in advance, or an option to be applied by the user equipment 20 may be configured from the base station apparatus 10 to the user equipment 20. The latter configuration may be performed together with the configuration of the PUR (and the PUR USS) in S101 of Fig. 7.

### <Example 1-2>

In Example 1-2, an operation of the user equipment 20 in a case where the PUR and a predetermined resource of the DL monitored by the user equipment 20 collide will be described. The "predetermined resource" is as described in Example 1-1.

When the user equipment 20 detects that the PUR and a predetermined resource collide at the timing of data transmission using the PUR based on the configuration from the base station apparatus 10 or the configuration stored in advance, the user equipment 20 executes an operation of any one of the following Options 1 to 3.

Option 1:
The user equipment 20 monitors only the predetermined resource. In this case, the user equipment 20 omits data transmission using the PUR at the timing, and performs data transmission using the PUR at the next timing (timing at which collision with the predetermined resource does not occur).

In the example of Fig. 11, in the subframe #0, the user equipment 20 executes only the monitoring of the SS/PBCH between the PUR data transmission and the SS/PBCH monitoring of the SS/PBCH monitoring, and does not perform the PUR data transmission. The user equipment 20 performs data transmission using a PUR at another timing (PUR that does not collide with a predetermined resource), for example.

Option 2:
The user equipment 20 performs only data transmission using the PUR and does not monitor the predetermined resource. In the example of Fig. 11, in the subframe #0, the user equipment 20 performs data transmission using the PUR and does not monitor the SS/PBCH. In this case, the user equipment 20 monitors the SS/PBCH (SS/PBCH that does not collide with the PUR) of the next period.

Option 3:
When the user equipment 20 has a capability (UE capability) of performing both data transmission using the PUR and monitoring of the predetermined resource, the user equipment 20 performs both the data transmission using the PUR and the monitoring of the predetermined resource. In the example of Fig. 11, the user equipment 20 performs both data transmission using the PUR and monitoring of the SS/PBCH in the subframe #0.

In the frequency domain, for example, when the PUR is in the band 1 having a narrow bandwidth and the predetermined resource is in the band 2 having a narrow bandwidth that does not overlap the band 1, the user equipment 20 simultaneously executes transmission in the band 1 and monitoring in the band 2 or executes transmission using the PUR and monitoring of the predetermined resource while switching between the band 1 and the band 2.

Regarding option selection:
As in the case of Example 1-1, regarding which of Options 1 to 3 is to be applied by the user equipment 20, an option to be applied may be configured in the user equipment 20 in advance, or an option to be applied by the user equipment 20 may be configured from the base station apparatus 10 to the user equipment 20. The latter configuration may be performed together with the configuration of the PUR (and the PUR USS) in S101 of Fig. 7.

According to Example 1 described above, it is possible to appropriately cope with the overlapping of resources, such as overlapping of the PUR USS and the predetermined resource, in the radio communication system in which data transmission using the PUR is performed.

### (Example 2)

Next, Example 2 will be described. Example 2 can be executed in combination with Example 1.

In Example 2, a time resource in which the PUR and the PUR USS can be arranged is determined in advance. The time resource in which the PUR and the PUR USS can be arranged is a time resource that does not collide with the time resource of the predetermined resource described in Example 1.

In addition, in Example 2, a counter having a value in configured time units (in subframe units in the present embodiment) is defined for the time resource in which the PUR and the PUR USS can be arranged. For example, when subframe #1 to subframe #4 and subframe #6 to subframe #9 in one frame including subframe #0 to subframe #9 are defined as a time resource in which the PUR and the PUR USS can be arranged, the value of the counter is determined as 0, 1, 2, 3, 4, 5, 6, 7 in the order of subframes #1, #2, #3, #4, #6, #7, #8, #9.

In Example 2, this counter is called a valid subframe counter. In addition, the use of the valid subframe counter is merely an example. Other pieces of information used to determine whether or not the arrangement of the PUR or the PUR SS is valid may be used as an alternative.

In addition, the valid subframe counter may be defined commonly for the UL and the DL, or may be defined separately for the UL and the DL. When the valid subframe counter is defined separately for the UL and the DL, the valid subframe counter for the UL indicates a time position where the PUR can be arranged, and the valid subframe counter for the DL indicates a time position where the PUR USS can be arranged.

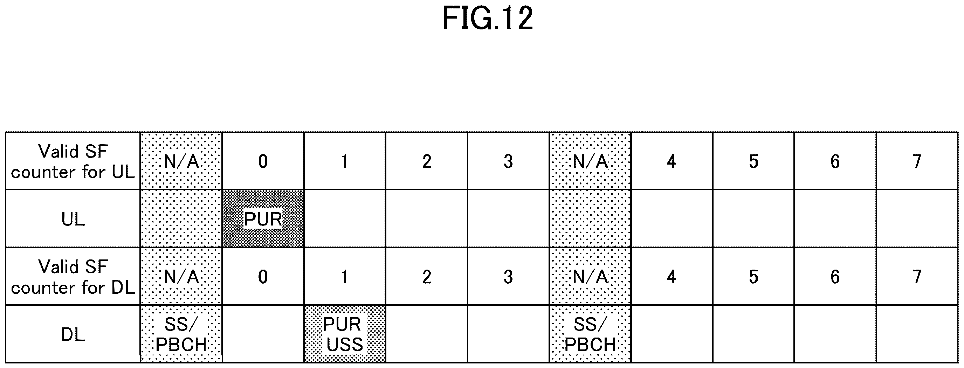

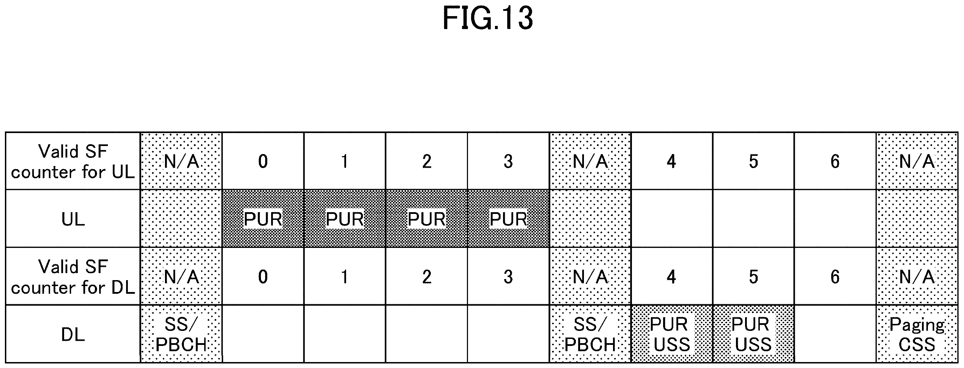

Figs. 12 and 13 illustrate examples of configuration of the valid subframe counter, the PUR, and the PUR USS.

In the example illustrated in Fig. 12, the PUR is configured in a subframe in which the value of the valid subframe counter is 0, and the PUR USS is configured in a subframe immediately thereafter.

In the example illustrated in Fig. 13, the PUR is configured in subframes in which the value of the valid subframe counter value is 0 to 3, and the PUR USS is configured in two subframes immediately thereafter.

Definition information of the valid subframe counter indicating which subframe is valid, that is, for which subframe the PUR or the PUR USS can be assigned (for example, information indicating that subframe #1 to subframe #4 and subframe #6 to subframe #9 correspond to valid subframe counter = 0, 1, 2, 3, 4, 5, 6, 7) is configured in advance in the user equipment 20 and the base station apparatus 10 (that is, specified in the specification), for example. Alternatively, the definition information of the valid subframe counter may be configured from the base station apparatus 10 to the user equipment 20.

Note that, the definition information of the valid subframe counter may differ due to a difference in radio access method (eMTC, NB-IoT, and the like), a difference in UE category, a difference in UE capability, and the like. For example, in a valid subframe counter for the user equipment 20 that can simultaneously perform monitoring of a certain CSS and monitoring of a PUR USS, the subframe in which the CSS is transmitted is a valid subframe in which the PUR USS can be arranged, and a certain value of the valid subframe counter is associated with the subframe.

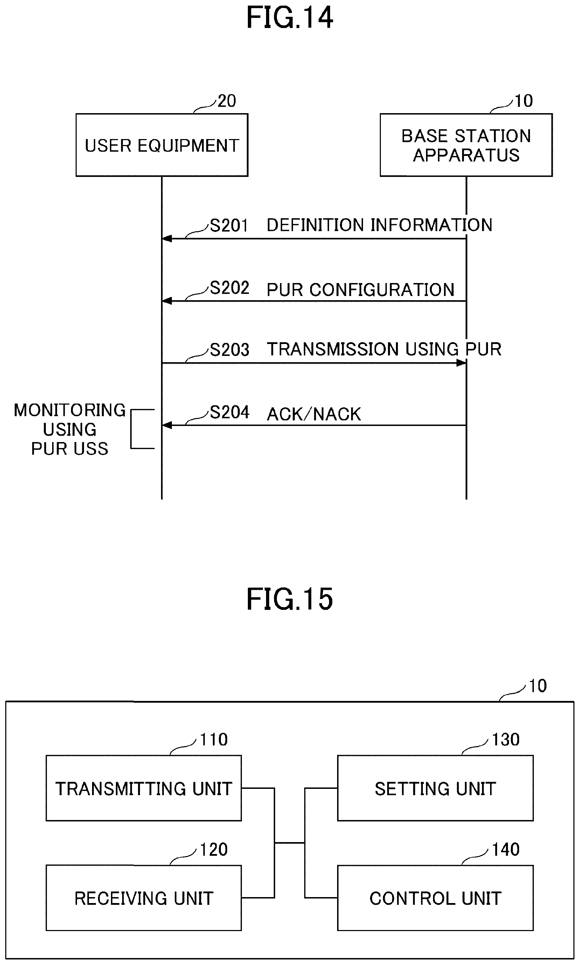

Fig. 14 is a diagram illustrating an example of a sequence when the definition information of the valid subframe counter is configured from the base station apparatus 10 to the user equipment 20.

In S201, the base station apparatus 10 transmits the definition information of the valid subframe counter to the user equipment 20 by, for example, RRC signaling.

In S202, the base station apparatus 10 transmits a PUR configuration to the user equipment 20 by, for example, RRC signaling, a MAC signal, or a DCI. The configuration information includes, for example, a value of the valid subframe counter that specifies the PUR. The configuration may include a value of the valid subframe counter indicating the start time position of the PUR and a value indicating the time length of the PUR (for example, the number of subframes).

In addition, the configuration information may include a value of the valid subframe counter that specifies the PUR USS. In addition, the configuration information may include a value of the valid subframe counter indicating the start time position of the PUR USS and a value indicating the time length of the PUR USS (for example, the number of subframes).

In addition, in a case where it is determined in advance that the PUR USS of a predetermined time length is configured from the value of the valid subframe counter next to the value of the valid subframe counter indicating the end of the PUR, the configuration information may include a value of the valid subframe counter that specifies the PUR and may not include a value indicating the PUR USS, for example.

In addition, instead of executing S201, the definition information of the valid subframe counter may be included in the configuration of S202.

In S203, the user equipment 20 performs data transmission through the PUSCH using the PUR. In S204, the base station apparatus 10 transmits feedback information, such as ACK/NACK, to the user equipment 20 through the PDCCH. The user equipment 20 monitors the PUR USS, and receives the ACK/NACK addressed to itself in S103.

According to the technique of Example 2 described above, it is possible to eliminate resource overlapping, such as overlapping of the PUR USS and the predetermined resource, in the radio communication system in which data transmission using the PUR is performed. That is, it is possible to appropriately cope with resource overlapping.

### (Equipment configuration)

Next, functional configuration examples of the base station apparatus 10 and the user equipment 20 that execute the processing and the operations described up to now will be described. The base station apparatus 10 and the user equipment 20 have all functions described above. However, each of the base station apparatus 10 and the user equipment 20 may have only one of all the functions described above.

### <Base station apparatus 10>

Fig. 15 is a diagram illustrating an example of the functional configuration of the base station apparatus 10. As illustrated in Fig. 15, the base station apparatus 10 includes a transmitting unit 110, a receiving unit 120, a setting unit 130, and a control unit 140. The functional configuration illustrated in Fig. 15 is only an example. As long as the operation according to the embodiment of the invention can be performed, any functional division and any name of each functional unit may be applied.

The transmitting unit 110 has a function of generating a signal to be transmitted to the user equipment 20 and transmitting the signal wirelessly. The receiving unit 120 has a function of receiving various signals transmitted from the user equipment 20 and acquiring, for example, information of higher layers from the received signals.

The setting unit 130 stores a configuration set in advance and various configurations to be transmitted to the user equipment 20 in a storage device provided in the setting unit 130, and reads out the configuration from the storage device as necessary. Examples of the configuration include a configuration of the PUR and the PUR USS configured in the user equipment 20 and the definition information described in Example 2. The control unit 140 controls the base station apparatus 10.

### <User equipment 20>

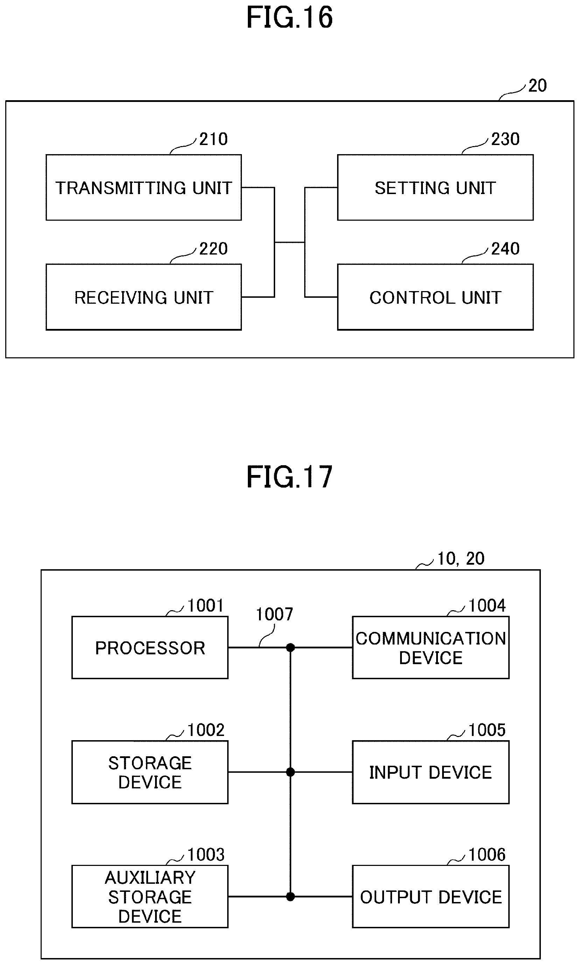

Fig. 16 is a diagram illustrating an example of the functional configuration of the user equipment 20. As illustrated in Fig. 16, the user equipment 20 includes a transmitting unit 210, a receiving unit 220, a setting unit 230, and a control unit 240. The functional configuration illustrated in Fig. 16 is only an example. As long as the operation according to the embodiment of the invention can be performed, any functional division and any name of each functional unit may be applied.

The transmitting unit 210 generates a transmission signal from transmission data, and transmits the transmission signal wirelessly. The receiving unit 220 wirelessly receives various signals, and acquires a higherlayer signal from the received physical layer signal.

The setting unit 230 stores various configurations, which have been received from the base station apparatus 10 by the receiving unit 220, in a storage device provided in the setting unit 230, and reads out the configuration from the storage device as necessary. The setting unit 230 also stores the configuration set in advance. Examples of the configuration include a configuration of the PUR and the PUR USS set from the base station apparatus 10 and the definition information described in Example 2. The control unit 240 controls the user equipment 20.

### (Hardware configuration)

The block diagrams (Figs. 15 and 16) used in the description of the above embodiment illustrate blocks in functional units. These functional blocks (configuration units) are realized by any combination of at least one of hardware and software. In addition, a method of realizing each functional block is not particularly limited. That is, each functional block may be realized using one physically or logically coupled device, or may be realized by connecting two or more physically or logically separated devices directly or indirectly (for example, using a wired or wireless connection) and using the plurality of devices. Each functional block may be realized by combining the above-described one device or the above-described plurality of devices with software.

Functions include determining, judging, calculating, computing, processing, deriving, investigating, looking up, ascertaining, receiving, transmitting, output, access, resolving, selecting, choosing, establishing, comparing, assuming, expecting, regarding, broadcasting, notifying, communicating, forwarding, configuring, reconfiguring, allocating, mapping, assigning, and the like, but are not limited thereto. For example, a functional block (configuration unit) that makes transmission function is called a transmitting unit or a transmitter. In any case, as described above, the realization method is not particularly limited.

For example, the base station apparatus 10, the user equipment 20, and the like according to an embodiment of the present disclosure may function as a computer that performs processing of the radio communication method according to the present disclosure. Fig. 17 is a diagram illustrating an example of the hardware configuration of the base station apparatus 10 and the user equipment 20 according to an embodiment of the present disclosure. Each of the base station apparatus 10 and the user equipment 20 described above may be physically configured as a computer apparatus including a processor 1001, a storage device 1002, an auxiliary storage device 1003, a communication device 1004, an input device 1005, an output device 1006, a bus 1007, and the like.

In addition, in the following description, the term "device" can be read as a circuit, a unit, and the like. The hardware configuration of each of the base station apparatus 10 and the user equipment 20 may be configured to include one or more devices for each device illustrated in the diagram, or may be configured not to include some devices.

Each function in the base station apparatus 10 and the user equipment 20 can be realized by reading predetermined software (program) onto hardware, such as the processor 1001 and the storage device 1002, so that the processor 1001 performs an operation and controlling communication using the communication device 1004 or controlling at least one of reading and writing of data in the storage device 1002 and the auxiliary storage device 1003.

The processor 1001 controls the entire computer by operating an operating system, for example. The processor 1001 may be configured by a central processing unit (CPU) including an interface with peripheral equipment, a control device, an operation device, a register, and the like. For example, the control unit 140, the control unit 240, and the like described above may be realized by the processor 1001.

In addition, the processor 1001 reads a program (program code), a software module, data, and the like into the storage device 1002 from at least one of the auxiliary storage device 1003 and the communication device 1004, and executes various kinds of processing according to these. As the program, a program causing a computer to execute at least a part of the operation described in the above embodiment is used. For example, the control unit 140 of the base station apparatus 10 illustrated in Fig. 15 may be realized by a control program that is stored in the storage device 1002 and operated by the processor 1001. In addition, for example, the control unit 240 of the user equipment 20 illustrated in Fig. 16 may be realized by a control program that is stored in the storage device 1002 and operated by the processor 1001. Although it has been described that the various kinds of processing described above are executed by one processor 1001, the various kinds of processing described above may be executed simultaneously or sequentially by two or more processors 1001. The processor 1001 may be implemented by one or more chips. In addition, the program may be transmitted from a network through a telecommunication line.

The storage device 1002 is a computer-readable recording medium, and may be configured by at least one of, for example, a Read Only Memory (ROM), an Erasable Programmable ROM (EPROM), an Electrically Erasable Programmable ROM (EEPROM), and a Random Access Memory (RAM). The storage device 1002 may be called a register, a cache, a main memory, and the like. The storage device 1002 can store a program (program code), a software module, and the like that can be executed to execute the communication method according to an embodiment of the present disclosure.

The auxiliary storage device 1003 is a computer-readable recording medium, and may be configured by at least one of, for example, an optical disk such as a Compact Disc ROM (CD-ROM), a hard disk drive, a flexible disk, and a magneto-optical disk (for example, a compact disk, a digital versatile disk, and a Blu-ray (Registered trademark) disk), a smart card, a flash memory (for example, a card, a stick, a key drive), a floppy (registered trademark) disk, and a magnetic strip. The auxiliary storage device 1003 may be called an auxiliary storage device. The storage medium described above may be, for example, a database including at least one of the storage device 1002 and the auxiliary storage device 1003, a server, or other appropriate media.

The communication device 1004 is hardware (transmitting and receiving device) for performing communication between computers through at least one of a wired network and a radio network, and is also referred to as, for example, a network device, a network controller, a network card, and a communication module. The communication device 1004 may be configured to include, for example, a high-frequency switch, a duplexer, a filter, a frequency synthesizer, and the like in order to realize at least one of frequency division duplex (FDD) and time division duplex (TDD), for example. For example, a transmitting and receiving antenna, an amplifier unit, a transmitting and receiving unit, a transmission line interface, and the like may be realized by the communication device 1004. The transmitting and receiving unit may be implemented so as to be physically or logically separated from the transmitting unit and the receiving unit.

The input device 1005 is an input device (for example, a keyboard, a mouse, a microphone, a switch, a button, and a sensor) for receiving an input from the outside. The output device 1006 is an output device (for example, a display, a speaker, and an LED lamp) that performs output to the outside. In addition, the input device 1005 and the output device 1006 may be integrated (for example, a touch panel).

In addition, respective devices, such as the processor 1001 and the storage device 1002, are connected to each other by the bus 1007 for communicating information. The bus 1007 may be configured using a single bus, or may be configured using a different bus for each device.

In addition, each of the base station apparatus 10 and the user equipment 20 may be configured to include hardware, such as a microprocessor, a digital signal processor (DSP), an Application Specific Integrated Circuit (ASIC), a Programmable Logic Device (PLD), and a Field Programmable Gate Array (FPGA), and some or all of the functional blocks may be realized by the hardware. For example, the processor 1001 may be implemented using at least one of these hardware components.

### (Summary of embodiment)

According to the present embodiment, at least a user equipment described in the following articles is provided.

### (Article 1)

A user equipment including: a transmitting unit that transmits data to a base station apparatus using an uplink resource configured in advance; and a receiving unit that, when a search space for receiving information relevant to the uplink resource and a predetermined resource overlap each other in a time domain, monitors only one of the search space and the predetermined resource or monitors both the search space and the predetermined resource.

### (Article 2)

The user equipment described in Article 1, in which, when the search space for receiving the information relevant to the uplink resource and the predetermined resource overlap each other in the time domain, the receiving unit receives, from the base station apparatus, a configuration for giving an instruction to monitor only the search space, or monitor only the predetermined resource, or monitor both the search space and the predetermined resource.

### (Article 3)

A user equipment including: a transmitting unit that transmits data to base station apparatus using an uplink resource configured in advance; and a receiving unit that monitors a search space for receiving information relevant to the uplink resource, in which, when the uplink resource and a predetermined downlink resource overlap each other in a time domain, the transmitting unit does not perform data transmission using the uplink resource and the receiving unit monitors the predetermined resource, or the receiving unit does not monitor the predetermined resource and the transmitting unit performs data transmission using the uplink resource, or the transmitting unit performs data transmission using the uplink resource and the receiving unit monitors the predetermined resource.

### (Article 4)

The user equipment described in any one of Articles 1 to 3, in which the predetermined resource is a resource for receiving a synchronization signal, a resource for receiving a wakeup signal, a resource for receiving a PBCH, a search space for receiving system information, a search space for receiving paging, or a search space for receiving a random access response.

### (Article 5)

A user equipment including: a transmitting unit that transmits data to base station apparatus using an uplink resource at a first time position determined so as not to overlap a predetermined resource in a time domain; and a receiving unit that monitors a search space at a second time position, which is determined so as not to overlap the predetermined resource in the time domain, in order to receive information relevant to the uplink resource.

### (Article 6)

The user equipment described in Article 5, in which the receiving unit receives, from the base station apparatus, a value of a counter indicating the first time position as a configuration of the uplink resource.

According to any one of Articles 1 to 6, there is provided a technique capable of appropriately coping with overlapping of resources in a radio communication system in which data transmission is performed using preconfigured uplink resources.

### (Supplement to embodiment)

While the embodiment of the invention has been described above, the disclosed invention is not limited to such an embodiment, and those skilled in the art will understand various variations, modifications, alternatives, substitutions, and the like. Although the description has been made using specific numerical examples to facilitate the understanding of the invention, those numerical values are merely examples and any appropriate values may be used unless otherwise specified. The division of the items in the above description is not essential to the invention, and the matters described in two or more items may be used in combination as necessary, or the matter described in a certain item may be applied to the matter described in another item (unless there is a contradiction). The boundaries between functional units or processing units in the functional block diagrams do not always correspond to the boundaries between physical components. The operation of a plurality of functional units may be physically performed by one component, or the operation of one functional unit may be physically performed by a plurality of components. In the processing procedure described in the embodiment, the order of the processing may be changed as long as there is no contradiction. Although the base station apparatus 10 and the user equipment 20 have been described using functional block diagrams for convenience of description of the processing, such equipment may be realized by hardware, software, or a combination thereof. The software operated by the processor of the base station apparatus 10 according to the embodiment of the invention and the software operated by the processor of the user equipment 20 according to the embodiment of the invention may be stored in a random access memory (RAM), a flash memory, a read only memory (ROM), an EPROM, an EEPROM, a register, a hard disk (HDD), a removable disk, a CD-ROM, a database, a server, or any other appropriate storage media.

In addition, the notification of information is not limited to the aspect/embodiment described in the present disclosure, and may be performed using other methods. For example, the notification of information may be performed using physical layer signaling (for example, Downlink Control Information (DCI), Uplink Control Information (UCI)), higher layer signaling (for example, Radio Resource Control (RRC) signaling, Medium Access Control (MAC) signaling, broadcast information (Master Information Block (MIB), System Information Block (SIB)), other signals, or a combination thereof. In addition, the RRC signaling may be called an RRC message, and may be, for example, an RRC connection setup message or an RRC connection reconfiguration message.

Each aspect/embodiment described in the present disclosure may be applied to at least one of systems, which use Long Term Evolution (LTE), LTE-Advanced (LTE-A), SUPER 3G, IMT-Advanced, 4th generation mobile communication system (4G), 5th generation mobile communication system (5G), Future Radio Access (FRA), and new Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and next-generation systems extended based on these. In addition, a plurality of systems may be combined (for example, a combination of 5G and at least one of LTE and LTE-A) to be applied.

In the processing procedure, sequence, flowchart, and the like in each aspect/embodiment described in this specification, the order may be changed as long as there is no contradiction. For example, for the methods described in this disclosure, elements of various steps are presented using an exemplary order, and the invention is not limited to the specific order presented.

The specific operation described as being performed by the base station apparatus 10 in this specification may be performed by its upper node in some cases. In a network including one or more network nodes each having the base station apparatus 10, it is obvious that various operations performed for communication with the user equipment 20 can be performed by at least one of the base station apparatus 10 and other network nodes (for example, MME, S-GW, and the like can be considered, but the network node is not limited thereto) other than the base station apparatus 10. Although a case where the number of other network nodes other than the base station apparatus 10 is one has been exemplified above, the other network nodes may be a combination (for example, MME and S-GW) of a plurality of other network nodes.

Information or signals described in the present disclosure can be output from a higher layer (or a lower layer) to a lower layer (or a higher layer). Information or signals described in the present disclosure may be input and output through a plurality of network nodes.

Information or the like that is input and output may be stored in a specific place (for example, a memory) or may be managed using a management table. The information or the like that is input and output can be overwritten, updated, or added. The information or the like that is output may be deleted. The information or the like that is input may be transmitted to another device.

The judging in the present disclosure may be performed based on a value expressed by 1 bit (0 or 1), may be performed based on Boolean (true or false), or may be performed by numerical value comparison (for example, comparison with a predetermined value).

Software, regardless of whether this is called software, firmware, middleware, microcode, a hardware description language, or any other name, should be interpreted broadly to mean instructions, instruction sets, codes, code segments, program codes, programs, subprograms, software modules, applications, software applications, software packages, routines, subroutines, objects, executable files, execution threads, procedures, functions, and the like.

In addition, software, instructions, information, and the like may be transmitted and received through a transmission medium. For example, in a case where software is transmitted from a website, a server, or other remote sources using at least one of the wired technology (coaxial cable, optical fiber cable, twisted pair, digital subscriber line (DSL), and the like) and the wireless technology (infrared, microwave, and the like), at least one of the wired technology and the wireless technology is included within the definition of the transmission medium.

The information, signals, and the like described in this disclosure may be expressed using any of a variety of different technologies. For example, data, instructions, commands, information, signals, bits, symbols, and chips that can be referred to throughout the above description may be represented by voltage, current, electromagnetic waves, magnetic field or magnetic particles, light field or photon, or any combination thereof.

In addition, the terms described in the present disclosure and the terms necessary for understanding the present disclosure may be replaced with terms having the same or similar meaning. For example, at least one of the channel and the symbol may be a signal (signaling). In addition, the signal may be a message. In addition, a component carrier (CC) may be called a carrier frequency, a cell, a frequency carrier, or the like.

The terms "system" and "network" used in this disclosure are used interchangeably.

In addition, the information, parameters, and the like described in the present disclosure may be expressed using an absolute value, may be expressed using a relative value from a predetermined value, or may be expressed using another corresponding information. For example, the radio resource may be indicated by an index.

The names used for the parameters described above are not limiting names in any way. In addition, equations and the like using these parameters may be different from those explicitly disclosed in the present disclosure. Since various channels (for example, PUSCH, a PUCCH, and a PDCCH) and information elements can be identified by any suitable names, various names allocated to these various channels and information elements are not limiting names in any way.

In the present disclosure, terms such as "base station (BS)", "radio base station", "base station apparatus", "fixed station", "NodeB", "eNodeB (eNB)", "gNodeB (gNB)","access point", "transmission point", "reception point", "transmission/reception point", "cell", "sector", "cell group", "carrier", and "component carrier" can be used interchangeably. The base station may also be referred to as terms, such as a macro cell, a small cell, a femto cell, and a pico cell.

The base station can include one or more (for example, three) cells. When the base station includes a plurality of cells, the entire coverage area of the base station can be divided into a plurality of smaller areas, and each of the smaller area can also provide a communication service using a base station subsystem (for example, a remote radio head (RRH). The term "cell" or "sector" refers to a part or the entirety of the coverage area of at least one of a base station and a base station subsystem that provides communication services in this coverage.

In the present disclosure, terms such as "mobile station (MS)", "user terminal", "user equipment (UE)", and "terminal" can be used interchangeably.

The mobile station may also be called a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms depending on those skilled in the art.

At least one of the base station and the mobile station may be called a transmitting device, a receiving device, a communication device, and the like. In addition, at least one of the base station and the mobile station may be a device mounted on a moving body, the moving body itself, and the like. The moving body may be a vehicle (for example, a car or an airplane), an unmanned moving body (for example, a drone or a self-driving car), or a robot (maned or unmanned). In addition, at least one of the base station and the mobile station necessarily includes a device that does not move during a communication operation. For example, at least one of the base station and the mobile station may be an Internet of Things (IoT) device, such as a sensor.

In addition, the base station apparatus in the present disclosure may be read as user equipment. For example, each aspect/embodiment of the present disclosure may be applied to a configuration in which communication between base station apparatus and user equipment is replaced with communication between a plurality of pieces of user equipment 20 (which may be called, for example, Device-to-Device (D2D) or Vehicle-to-Everything (V2X)). In this case, the user equipment 20 may have the above-described function of the base station apparatus 10. In addition, terms such as "uplink" and "downlink" may be read as terms corresponding to terminal-to-terminal communication (for example, "side"). For example, an uplink channel, a downlink channel, and the like may be read as a side channel.

Similarly, the user equipment in the present disclosure may be read as base station apparatus. In this case, the base station apparatus may have the above-described function of the user equipment.

The terms "determining" used in the present disclosure may involve a wide variety of operations. For example, "determining" can include considering judging, calculating, computing, processing, deriving, investigating, looking up (search, inquiry) (for example, looking up in a table, database, or another data structure), and ascertaining as "determining". In addition, "determining" can include considering receiving (for example, receiving information), transmitting (for example, transmitting information), input, output, accessing (for example, accessing data in a memory) as "determining". In addition, "determining" can include considering resolving, selecting, choosing, establishing, comparing, and the like as "determining". In other words, "determining" can include considering any operation as "determining". In addition, "determining" may be read as "assuming", "expecting", "considering", and the like.

The terms "connected" and "coupled" or variations thereof mean any direct or indirect connection or coupling between two or more elements, and can include a case where one or more intermediate elements are present between two elements "connected" or "coupled" to each other. The coupling or connection between elements may be physical, logical, or a combination thereof. For example, "connection" may be read as "access". When used in this disclosure, two elements can be considered to be "connected" or "coupled" to each other using at least one of one or more wires, cables, and printed electrical connections and using some non-limiting and noncomprehensive examples, such as electromagnetic energy having wavelengths in a radio frequency domain, a microwave domain, and a light (both visible and invisible) domain.

The reference signal may be abbreviated as RS (Reference Signal), and may be called Pilot according to the applied standard.

The description "based on" used in this disclosure does not mean "based only on" unless otherwise specified. In other words, the description "based on" means both "based only on" and "based at least on".

Any reference to elements using designations such as "first" and "second" used in the present disclosure does not generally limit the quantity or order of the elements. These designations can be used in the present disclosure as a convenient method for distinguishing between two or more elements. Therefore, references to first and second elements do not mean that only two elements can be adopted or that the first element should precede the second element in any way.

"Means" in the configuration of each device described above may be replaced with "unit", "circuit", "device", and the like.

When "include", "including", and variations thereof are used in the present disclosure, these terms are intended to be inclusive similarly to the term "comprising". In addition, the term "or" used in the present disclosure is intended not to be an exclusive-OR.

A radio frame may be configured by one or more frames in the time domain. Each of one or more frames in the time domain may be referred to as a subframe. In addition, the subframe may be configured by one or more slots in the time domain. The subframe may be a fixed time length (for example, 1 ms) that does not depend on numerology.

Numerology may be a communication parameter applied to at least one of transmission and reception of a certain signal or channel. Numerology may indicate at least one of, for example, subcarrier spacing (SCS), bandwidth, symbol length, cyclic prefix length, transmission time interval (TTI), the number of symbols per TTI, radio frame configuration, specific filtering processing performed in the frequency domain by the transceiver, and specific windowing processing performed in the time domain by the transceiver.

A slot may be configured by one or more symbols (Orthogonal Frequency Division Multiplexing (OFDM) symbol, Single Carrier Frequency Division Multiple Access (SC-FDMA) symbol, and the like) in the time domain. A slot may be a time unit based on numerology.

A slot may include multiple mini-slots. Each mini-slot may be configured by one or more symbols in the time domain. In addition, the mini-slot may be called a subslot. A mini-slot may be configured by a smaller number of symbols than that in a slot. A PDSCH (or a PUSCH) transmitted in time units larger than the mini-slot may be referred to as PDSCH (or PUSCH) mapping type A. A PDSCH (or a PUSCH) transmitted using a mini-slot may be referred to as PDSCH (or PUSCH) mapping type B.

Each of the radio frame, the subframe, the slot, the mini-slot, and the symbol indicates a time unit when transmitting a signal. The radio frame, the subframe, the slot, the mini-slot, and the symbol may have different names corresponding thereto.

For example, one subframe may be called a transmission time interval (TTI), a plurality of consecutive subframes may be called a TTI, and one slot or one mini-slot may be called a TTI. That is, at least one of the subframe and the TTI may be a subframe (1 ms) in the known LTE, a period (for example, 1 to 13 symbols) shorter than 1 ms, or a period longer than 1 ms. In addition, the unit indicating the TTI may be called a slot, a mini-slot, or the like, instead of a subframe.

Here, the TTI refers to, for example, a minimum time unit of scheduling in radio communication. For example, in the LTE system, the base station performs scheduling for allocating radio resources (frequency bandwidth, transmission power, and the like that can be used in each user equipment 20) to each user equipment 20 in TTI units. In addition, the definition of the TTI is not limited to this.

The TTI may be a transmission time unit, such as a channel-encoded data packet (transport block), a code block, and a code word, or may be a processing unit, such as scheduling and link adaptation. In addition, when a TTI is given, a time section (for example, the number of symbols) in which a transport block, a code block, a code word, and the like are actually mapped may be shorter than the TTI.

In addition, when one slot or one mini-slot is called a TTI, one or more TTIs (that is, one or more slots or one or more mini-slots) may be a minimum time unit for scheduling. In addition, the number of slots (the number of mini-slots) configuring the minimum time unit of the scheduling may be controlled.

A TTI having a time length of 1 ms may be called a normal TTI (TTI in LTE Rel. 8-12), a long TTI, a normal subframe, a long subframe, a slot, and the like. A TTI shorter than the normal TTI may be called a short TTI, a partial or fractional TTI, a short subframe, a mini-slot, a subslot, a slot, and the like.

In addition, a long TTI (for example, a normal TTI or a subframe) may be read as a TTI having a time length exceeding 1 ms, and a short TTI may be read as a TTI shorter than the TTI length of the long TTI and equal to or longer than 1 ms.

A resource block (RB) is a resource allocation unit in the time domain and the frequency domain, and may include one or more consecutive subcarriers in the frequency domain. The number of subcarriers included in the RB may be the same regardless of numerology, and may be, for example, 12. The number of subcarriers included in the RB may be determined based on numerology.

In addition, the time domain of the RB may include one or more symbols, and may be the length of one slot, one mini-slot, one subframe, or one TTI. One TTI, one subframe, and the like may each be configured by one or more resource blocks.

In addition, one or more RBs may be called a physical resource block (PRB: Physical RB), a sub-carrier group (SCG), a resource element group (REG), a PRB pair, an RB pair, and the like.

In addition, the resource block may be configured by one or more resource elements (REs). For example, one RE may be a radio resource area of one subcarrier and one symbol.

A bandwidth part (BWP) (which may be called a partial bandwidth or the like) may indicate a subset of consecutive common resource blocks (common RBs) for certain numerology in a certain carrier. Here, the common RB may be specified by an index of the RB with the common reference point of the carrier as a reference. The PRB may be defined by a certain BWP and numbered within the BWP.

The BWP may include a BWP for UL (UL BWP) and a BWP for DL (DL BWP). For the UE, one or more BWPs may be set in one carrier.

At least one of the set BWPs may be active, and it may not be assumed that the UE transmits and receives a predetermined signal/channel outside the active BWP. In addition, "cell", "carrier", and the like in the present disclosure may be read as "BWP".

The structures of the radio frame, the subframe, the slot, the mini-slot, and the symbol described above are merely examples. For example, the number of subframes included in a radio frame, the number of slots per subframe or radio frame, the number of mini-slots included in a slot, the number of symbols and RBs included in a slot or mini-slot, the number of subcarriers included in an RB, the number of symbols in the TTI, the symbol length, the cyclic prefix (CP) length, and the like can be changed in various ways.

In the present disclosure, in a case where articles, for example, a, an, and the in English, are added by translation, the present disclosure may include that nouns subsequent to these articles are plural.

In the present disclosure, the expression "A and B are different" may mean "A and B are different from each other". In addition, the expression may mean that "A and B each are different from C". Terms such as "separate", "coupled" may be interpreted similarly to "different".

Each aspect/embodiment described in the present disclosure may be used alone, may be used in combination, or may be switched and used according to execution. In addition, the notification of predetermined information (for example, notification of "X") is not limited to being explicitly performed, and may be performed implicitly (for example, without the notification of the predetermined information).

In addition, in the present disclosure, the SS block or the CSI-RS is an example of a synchronization signal or a reference signal.

While the present disclosure has been described in detail, it is apparent to those skilled in the art that the present disclosure is not limited to the embodiment described in the present disclosure. The present disclosure can be implemented as modified and changed aspects without departing from the spirit and scope of the present disclosure defined by the description of the claims. Therefore, the description of the present disclosure is intended for illustrative purposes, and has no restrictive meaning to the present disclosure.

### EXPLANATIONS OF LETTERS OR NUMERALS

- 10: BASE STATION APPARATUS
- 110: TRANSMITTING UNIT
- 120: RECEIVING UNIT
- 130: SETTING UNIT
- 140: CONTROL UNIT
- 20: USER EQUIPMENT
- 210: TRANSMITTING UNIT
- 220: RECEIVING UNIT
- 230: SETTING UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A user equipment, comprising:
a transmitting unit that transmits data to a base station apparatus using a preconfigured uplink resource; and
a receiving unit that, when a search space for receiving information relevant to the uplink resource and a predetermined resource overlap each other in a time domain, monitors only one of the search space and the predetermined resource or monitors both the search space and the predetermined resource.

2. The user equipment according to claim 1,
wherein, when the search space for receiving the information relevant to the uplink resource and the predetermined resource overlap each other in the time domain, the receiving unit receives, from the base station apparatus, a configuration for giving an instruction to monitor only the search space, or monitor only the predetermined resource, or monitor both the search space and the predetermined resource.

3. A user equipment, comprising:
a transmitting unit that transmits data to a base station apparatus using a preconfigured uplink resource; and
a receiving unit that monitors a search space for receiving information relevant to the uplink resource,
wherein, when the uplink resource and a predetermined downlink resource overlap each other in a time domain, the transmitting unit does not perform data transmission using the uplink resource and the receiving unit monitors the predetermined resource, or the receiving unit does not monitor the predetermined resource and the transmitting unit performs data transmission using the uplink resource, or the transmitting unit performs data transmission using the uplink resource and the receiving unit monitors the predetermined resource.

4. The user equipment according to any one of claims 1 to 3,
wherein the predetermined resource is a resource for receiving a synchronization signal, a resource for receiving a wakeup signal, a resource for receiving a PBCH, a search space for receiving system information, a search space for receiving paging, or a search space for receiving a random access response.

5. A user equipment, comprising:
a transmitting unit that transmits data to a base station apparatus using an uplink resource at a first time position determined so as not to overlap a predetermined resource in a time domain; and
a receiving unit that monitors a search space at a second time position, which is determined so as not to overlap the predetermined resource in the time domain, in order to receive information relevant to the uplink resource.

6. The user equipment according to claim 5,
wherein the receiving unit receives, from the base station apparatus, a value of a counter indicating the first time position as a configuration of the uplink resource.
